# EUROPÄISCHE PATENTANMELDUNG

(11) **EP 1 276 304 A2**
(43) Veröffentlichungstag der Anmeldung: **15.01.2003**
(21) Anmeldenummer: 02100721.6
(22) Anmeldetag: 19.06.2002
(51) Int. Cl.: H04M 3/56

(54) **Kommunikationssystem mit Systemkomponenten zur Feststellung der Urheberschaft eines Kommunikationsbeitrages**

(30) Priorität: 20.06.2001 DE 10129662
(71) Anmelder: Philips Corporate Intellectual Property GmbH, 20099 Hamburg (DE); Koninklijke Philips Electronics N.V., 5621 BA Eindhoven (NL)
(72) Erfinder: Scholl, Dr. Holger R. c/o Philips Corp. Intellect., 52066, Aachen (DE); Kellner, Andreas c/o Philips Corp. Intellect., 52066, Aachen (DE)
(74) Vertreter: Volmer, Georg, Dipl.-Ing.

(57) **Zusammenfassung**

Die Erfindung bezieht sich auf ein Kommunikationssystem mit Systemkomponenten zur Feststellung der Urheberschaft eines Kommunikationsbeitrages (40,41) mittels
- Auswertung eines Videosignals durch Mustererkennung und/oder
- Sprecheridentifikation durch Auswertung eines Audiosignals und/oder
- Bestimmung einer relativen Position des Urhebers (50) inmitten von Kommunikationsteilnehmer (50, 61 bis 66), die als das Kommunikationsendgerät benutzende Teilnehmer angemeldet sind.

Neben der Urheberschaft eines Beitrags (40, 41) kann auch die Stimmung des Urhebers (30, 31, 50) festgestellt werden. Das Kommunikationssystem ist derart ausgestaltet, einen Beitrag (40, 41) in einer Weise wiederzugeben, die den Urheber (30, 31, 50) des Beitrags (40, 41) und/oder dessen Stimmung kennzeichnet.

## Beschreibung

Die Erfindung bezieht sich auf ein Kommunikationssystem mit Systemkomponenten zur Feststellung der Urheberschaft eines Kommunikationsbeitrages. Kommunikationssysteme finden an vielen Stellen Anwendungen z. B. als Audio-/Video- und/oder Textkonferenzsysteme sowohl im geschäftlichen als auch im privaten Bereich. Insbesondere die auf das Internet-Protokoll gestützten Dienste wie Chatten, NetMeeting, Application-Sharing sowie andere entsprechende Groupware-Produkte erfreuen sich in jüngerer Zeit zunehmender Beliebtheit.

Die Kommunikationssysteme können dabei Sprache, stehende und bewegte Bilder, Texte, Steuerkommandos und dergleichen übertragen. Mit geeigneten Systemen können damit Möglichkeiten geschaffen werden, die es den Kommunikationsteilnehmern erlauben, annähernd in einer Art und Weise miteinander umzugehen, als wären sie an einem Ort. So können z. B. neben den sprachlichen Äußerungen und den Bewegtbildern der Teilnehmer auch Skizzen von Arbeitsentwürfen übertragen werden.

Nehmen mehr als zwei Teilnehmer an einer solchen Kommunikation teil, so kann es je nach Gegebenheiten u. U. für einen Teilnehmer schwierig zu entscheiden sein, von welchem Teilnehmer ein Kommunikationsbeitrag stammt. So kann z. B. in einer Audiokonferenz die Zuordnung der Stimme eines Sprechers zu dem Namen eines Teilnehmers Probleme bereiten, wenn die Teilnehmer einander noch nicht lange kennen. Weiter ist es zu Dokumentationszwecken nützlich, wenn das Kommunikationssystem die Urheberschaft der Beiträge erfasst und sie zusammen mit den Beiträgen z. B. zu späteren Beweis- und Auswertungszwecken speichert. Für diesen Zweck kann die Ermittlung der Urheberschaft eines Beitrages übrigens auch dann nützlich sein, wenn sich alle Kommunikationsteilnehmer an demselben Ort befinden. Um Übertragungsbandbreite zu sparen, übermitteln manche Systeme auch z. B. keine vollständigen Bewegtbilder der Teilnehmer, sondern nur Gestik- und Mimikbeschreibungen, die dann auf den Teilnehmergeräten in Bewegungen den Teilnehmer zugeordneter künstlicher Charaktere, so genannter Avatare, umgesetzt werden.

Für diese und ähnliche bekannte Systeme ist es erforderlich, dass das Kommunikationssystem feststellen kann, von welchem Teilnehmer ein Kommunikationsbeitrag erbracht wurde. So beschreibt die DE 197,24,719 A1 ein Audiokonferenzsystem, dessen Kommunikationsendgeräte über eine Mikrofoneinrichtung und eine Audiopegelerfassungseinrichtung verfügen. Die Audiopegelerfassungseinrichtung erfasst den von der Mikrofoneinrichtung empfangenen Audiopegel. Liegt dieser Audiopegel über einem festgelegten Wert, so übermittelt das Endgerät ein Audioeingabekennzeichnungssignal an die übrigen Endgeräte des Audiokonferenzsystems zur Anzeige der Audioeingabe. Entsprechend dieser Audioeingabekennzeichnungssignale zeigen die Endgeräte dann die Urheberschaft eines Beitrags auf einer Anzeigeeinrichtung an.

Die DE 197,24,719 A1 stützt sich also auf die Tatsache, dass jedem Endgerät eindeutig ein Kommunikationsteilnehmer zugeordnet ist, bzw. offenbart sie eine Lösung nur für die Fragestellung, von welchem Endgerät aus ein Kommunikationsbeitrag erbracht wurde. Benutzen dagegen mehrere Teilnehmer dasselbe Endgerät, z. B. die Teilnehmer einer Telefonkonferenz, die sich in einem Raum befinden, dasselbe Telefon mit Freisprecheinrichtung, so ist die Identifizierung nur des Endgerätes, von dem ein Beitrag ausging, zu ungenau. Weiter erfordert die DE 197,24,719 A1, dass das Endgerät selbst feststellt, ob von ihm ein Beitrag ausgeht, und dass es dies dann den übrigen Endgeräten mitteilt. Soll aber z. B. ein Audiokonferenzsystem als so genannter Applikationsservice z. B. über das Internet angeboten werden, so ist es wünschenswert, auch einfache Endgeräte, die beispielsweise nur aus einem PC mit Audiokarte und Mikrofon-/Lautsprecherkombination oder auch nur aus einem Telefon bestehen können, zu unterstützen.

Aufgabe der Erfindung ist es daher, ein Kommunikationssystem der eingangs genannten Art anzugeben, das es erlaubt die Urheberschaft eines Kommunikationsbeitrages auch dann zu bestimmen, wenn mehrere Teilnehmer dasselbe Endgerät benutzen und/oder die Feststellung der Urheberschaft ohne spezielle Unterstützung durch das Endgerät aus dem Beitrag selbst ermittelt werden muss.

Diese Aufgabe wird gelöst einerseits durch
- ein Kommunikationssystem mit Systemkomponenten zur Feststellung der Urheberschaft eines an einem Kommunikationsendgerät eingegebenen Kommunikationsbeitrages mittels
   - Auswertung eines Videosignals durch Mustererkennung und/oder
   - Sprecheridentifikation durch Auswertung eines Audiosignals und/oder
   - Bestimmung einer relativen Position des Urhebers inmitten von Kommunikationsteilnehmer, die als das Kommunikationsendgeräk benutzende Teilnehmer angemeldet sind,
   und andererseits durch
- ein Verfahren zur Feststellung der Urheberschaft eines an einem Kommunikationsendgerät eingegebenen Kommunikationsbeitrages mittels
   - Auswertung eines Videosignals durch Mustererkennung und/oder
   - Sprecheridentifikation durch Auswertung eines Audiosignals und/oder
   - Bestimmung einer relativen Position des Urhebers inmitten von Kommunikationsteilnehmer, die als das Kommunikationsendgeräk benutzende Teilnehmer angemeldet sind

Wird z. B. ein Videosignal der Kommunikationsteilnehmer übertragen, so können Methoden der Bildverarbeitung und der Mustererkennung eingesetzt werden, um festzustellen, wer der Initiator des Beitrages ist. So kann beispielsweise durch Erkennung der Lippenbewegung oder die Analyse visueller Szenen festgestellt werden, wer gerade spricht, eine Eingabe an einer Tastatur macht oder ein am Endgerät angeschlossenes Graphiktablett bedient. Die Verfahren der Sprecheridentifikation durch Auswertung eines Audiosignals, die sich z. B. auf statistische Methoden wie Gauß'sche Mischungsmodelle oder so genannte Hidden-Markov-Modelle stützen, erlauben es, den Urheber eines Audiobeitrages festzustellen. Dabei lassen sich die Auswertung eines Videosignals durch Mustererkennung und die Sprecheridentifikation durch Auswertung eines Audiosignals auch rein auf den Beitrag selbst anwenden und können ohne Unterstützung durch ein speziell ausgestattetes Endgerät eingesetzt werden.

Benutzen mehrere Teilnehmer dasselbe Endgerät, so lässt sich durch den Einsatz eines Sensors die relative Position desjenigen Teilnehmers, der gerade das Endgerät zur Erzeugung des Beitrages bedient, inmitten dieser Teilnehmer bestimmen. Die relativen Positionen lassen sich eindeutig mit den Teilnehmern verknüpfen, indem z. B. zu Beginn einer Telefonkonferenz bei der Anmeldung der die das Endgerät benutzenden Teilnehmer die relativen Positionen dieser Teilnehmer dem System bekannt gegeben und dann vom System weiterverfolgt werden. Daher bestimmt sich über die relative Position auch der Urheber des Beitrags.

Gemäß Anspruch 2 kommen als Sensor dabei eine Kamera, ein Mikrofon, ein Funkempfänger und/oder ein Infrarotempfänger in Frage. Gegebenenfalls müssen die Teilnehmer dazu zusätzliche Ausrüstung wie z. B. einen Transponder zum Funkkontakt und/oder einen Infrarotsignalgeber zum Infrarotkontakt tragen. Auch verbessern mehrere Sensoren wie beispielsweise der Einsatz von Mikrofonarrays i. d. R. die Güte solcher Lokalisierungssysteme. Wird nur ein einziges Mikrofon ohne weitere Sensoren eingesetzt, so kann man ein bewegliches Mikrofon mit Richtcharakteristik verwenden, mit dem sich die Richtung, aus welcher ein Teilnehmer spricht, und damit der Teilnehmer selbst bestimmen lässt.

Auch lassen sich die erfindungsgemäßen Methoden zur Feststellung der Urheberschaft nicht nur einzeln, sondern in vielfältigen Kombinationen einsetzen. Erfolgt beispielsweise die Eingabe eines Textbeitrages an einer Tastatur, so kann das Videosignal einer Kamera einmal einer Mustererkennung zugeführt werden, die feststellt, zu welchem Teilnehmer die Hände gehören, welche die Tastatur bedienen, und die anschließend durch Erkennung der Gesichtszüge der zu den Händen gehörigen Teilnehmers dessen Identität herausfindet. Andererseits kann das Videosignal auch dazu benutzt werden, die relativen Positionen der Teilnehmer zu verfolgen, wodurch bekannt ist, welcher Teilnehmer sich an der Tastatur aufhält. Tragen die Teilnehmer Transponder oder Infrarotsignalgeber, so kann diese Bestimmung der relativen Position auch über funk- oder infrarotbasierte Lokalisierungssysteme erfolgen. Alle diese Möglichkeiten lassen sich in Kombination miteinander verwenden.

Handelt es sich um einen sprachlichen Beitrag so kann einerseits eine Sprecheridentifikation durch Auswertung des Audiosignals durchgeführt werden. Andererseits kann jedoch auch ein Mikrofonarray zur Bestimmung der Richtung, aus welcher der Audiobeitrag kommt, eingesetzt werden. Weiter lässt sich die Auswertung des Videosignals einer die Teilnehmer beobachtenden Kamera durch Mustererkennung dazu benutzen, um festzustellen, wessen Teilnehmers Lippen sich in Übereinstimmung mit dem Audiosignal bewegen. Auch Transponder und Infrarotsignalgeber lassen sich wieder einsetzen.

Die abhängigen Ansprüche 3 bis 6 beziehen sich darauf, dass das Kommunikationssystem die Urheberinformation des Beitrags zu einer entsprechenden Kennzeichnung desselben verwendet. Die Art der Kennzeichnung kann dabei von weiteren Kriterien wie z. B. der Wichtigkeit oder der Beitragshäufigkeit des Urhebers und/oder von den speziellen Wünschen der Teilnehmer abhängen. Neben der reinen Urheberschaft eines Beitrages kann das Kommunikationssystem durch Mustererkennung auch die Stimmungen des Urhebers des Beitrags feststellen und den Beitrag mit einem Kennzeichen einer solchen Stimmung versehen.

Der abhängige Anspruch 7 beansprucht eine Ausgestaltung des erfindungsgemäßen Kommunikationssystems, das einen Kommunikationsbeitrag, seinen Urheber und/oder dessen Stimmung speichern kann. Solche gespeicherten Dokumentationen einer Kommunikation sind insbesondere bei geschäftlichen Besprechungen von großem Wert. So können beispielsweise getroffene Entschlüsse im Original dokumentiert werden.

Die abhängigen Ansprüche 8 und 9 beanspruchen Ausgestaltungen der Erfindung, in denen die Urheberschaft eines Beitrages zum einen in einem zentralen Gerät des Kommunikationssystems und zum anderem in einem teilnehmerseitigen Gerät, z. B. dem Kommunikationsendgerät vorgenommen wird. Dabei eignet sich die Bestimmung der Urheberschaft in einem zentralen Gerät besonders für die bereits erwähnten Applikationsservice-Anbieter (application service provider), die ein solches Kommunikationssystem als Applikationsservice z. B. über das Internet anbieten könnten. Dagegen erfordern einige Ausführungsformen der Erfindung wie z. B. die Mikrofonarrays eine spezielle Ausstattung der teilnehmerseitigen Geräte. Übermittelt man dann an Stelle der einzelnen Mikrofonsignale z. B. nur ein über die Mikrofone gemitteltes, so spart die teilnehmerseitige Ermittlung des Beitragsurhebers Übertragungsbandbreite.

Diese und weitere Aspekte und Vorteile der Erfindung werden im Folgenden an Hand der Ausführungsbeispiele und insbesondere an Hand der beigefügten Zeichnungen näher erläutert. Es zeigen:
- Fig. 1: eine Ausführungsform eines erfindungsgemäßen Kommunikationssystems,
- Fig. 2: eine Ausführungsform einer den Urheber kennzeichnenden Wiedergabe der Kommunikationsbeiträge in einem erfindungsgemäßen Kommunikationssystem,
- Fig. 3: eine Ausführungsform einer Kennzeichnung des Urhebers des momentanen Kommunikationsbeitrags in einem erfindungsgemäßen Kommunikationssystem,
- Fig. 4: den schematischen Ablauf einer Kommunikation in einem erfindungsgemäßen Kommunikationssystem in Form eines Flussdiagramms.

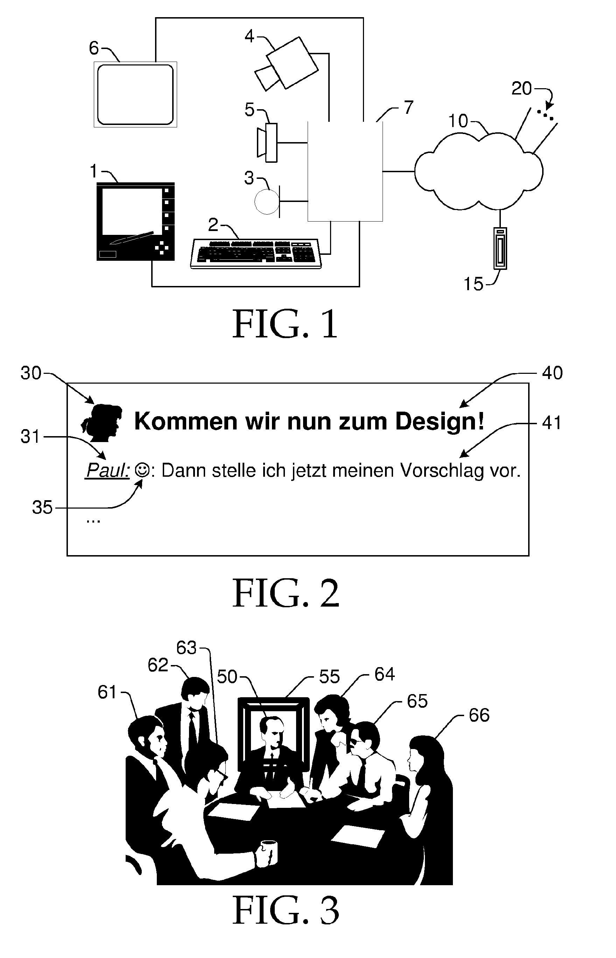

Die Fig. 1 zeigt eine Ausführungsform eines erfindungsgemäßen Kommunikationssystems. Ein an einem Standort befindliches teilnehmerseitiges Endgerät mit den Komponenten 1 bis 7 ist über ein Netzwerk 10 mit weiteren Teilnehmerendgeräten 20 sowie, in dieser Ausführungsform, mit einem zentralen Gerät 15 des Kommunikationssystems verbunden. Bei dem Netzwerk 10 kann es sich dabei um das öffentliche Telefonnetz, ein Mobilfunknetz, das Internet, ein unternehmensinternes Netzwerk oder dergleichen handeln. Das zentrale Gerät 15 ist in dieser Ausführungsform dazu vorgesehen, die Kommunikationsbeiträge von den Endgeräten zu empfangen, ihre Urheberschaft festzustellen und die Beiträge mit einer entsprechenden Kennzeichnung ihrer Urheberschaft auf den Endgeräten wiederzugeben.

Ein Teilnehmerendgerät kann dabei über die Komponenten 1 bis 7 verfügen. Davon dienen ein Graphiktablett 1, eine Tastatur 2, ein Mikrofon 3 und eine Kamera 4 zur Eingabe von Kommunikationsbeiträgen und/oder zur Erfassung von Informationen, die das Kommunikationssystem zur Feststellung der Urheberschaft eines Beitrags verwendet. Ein Lautsprecher 5 und ein Display 6 dienen zur akustischen und/oder optischen Wiedergabe der Beiträge und der Kennzeichnung ihrer Urheber. Die Komponenten 1 bis 6 sind an eine teilnehmerseitige Verarbeitungseinheit 7 angeschlossen, die den Datenfluss zu und von den Komponenten 1 bis 6 steuert und die Verbindung zum Netzwerk 10 herstellt.

In dieser Ausführungsform gibt die Verarbeitungseinheit 7 die von den Eingabekomponenten 1 bis 4 einlaufenden Daten über das Netzwerk 10 an das zentrale Gerät 15 weiter, während sie die vom zentralen Gerät 15 eintreffenden Daten an die entsprechenden Ausgabekomponenten 5 und 6 weiterleitet. Prinzipiell könnte die Verarbeitung der Daten jedoch auch anders zwischen der teilnehmerseitigen Verarbeitungseinheit 7 und dem zentralen Gerät 15 aufgeteilt werden. So könnte im Extremfall das zentrale Gerät 15 auch ganz wegfallen und die gesamte Datenverarbeitung von der teilnehmerseitigen Verarbeitungseinheit 7 übernommen werden. In diesem Fall könnte die über das Netzwerk 10 zu transportierende Datenmengs verringert werden. Die in Fig. 1 dargestellte Ausführungsform mit einem zentralen Gerät 15, das die Feststellung der Beitragsurheber und die Formatierung der Kennzeichnung und Wiedergabe der Beiträge übernimmt, bietet allerdings den Vorteil, dass die dazu nötige Verarbeitungsintelligenz an zentraler Stelle leicht verfügbar, wartbar und erweiterbar ist.

Fig. 2 zeigt eine Ausführungsform einer den Urheber kennzeichnenden Wiedergabe der Kommunikationsbeiträge in einem erfindungsgemäßen Kommunikationssystem. Gezeigt ist eine Darstellung der Kommunikationsbeiträge in Textform z. B. auf einem Display 6. Dabei können die Beiträge ursprünglich sowohl direkt in Textform z. B. über die Tastatur 2 eingegeben worden sein oder es kann ein zwischengeschaltetes Mustererkennungssystan dazu benutzt worden sein, um über das Graphiktablett 1 eingegebene Handschrift oder über das Mikrofon 3 eingegebene Sprache in Text umzuwandeln.

Der Text wird z. B. in zeitlicher Reihenfolge fortlaufend dargestellt, wie es von Chatsystemen her bekannt ist. Fig. 2 zeigt die beiden Textbeiträge 40 "Kommen wir nun zum Design!" und 41 "Dann stelle ich jetzt meinen Vorschlag vor.". Zur Darstellung der Textbeiträge wurden verschiedene Schriften verwendet, um sie voneinander zu unterscheiden. Dabei wurde der Textbeitrag 40 größer und fetter gedruckt wiedergegeben, z. B. um die Bedeutung seines Urhebers, bei dem es sich beispielsweise um den Leiter der Zusammenkunft handeln kann, zu betonen.

Die Urheber der Beiträge werden aber auch durch die den Texten vorangestellten Urheberkennzeichen 30 und 31 deutlich gemacht. Dabei wurde hier beispielhaft einmal ein skizzenhaftes Profil 30 einer weiblichen Person verwendet, wie es von so genannten Clip-Art-Darstellungen her bekannt ist, und zum anderen der Vorname 31 "Paul" des Urhebers. Daneben sind auch andere Urheberkennzeichen denkbar wie z. B. Bilder der Kommunikakionsteilnehmer, auch in stilisierter Form, oder auch Firmenlogos, wenn die Kommunikation zwischen verschiedenen Firmen stattfindet.

Schließlich ist der Textbeitrag 41 noch mit einem so genannten Emoticon 35, hier einem Smiley, d. h einer Strichzeichnung eines lachenden Gesichtes, versehen. Solche Hilfsmittel können z. B. dazu verwendet werden, stimmungsmäßige Äußerungen eines Kommunikationsteilnehmers an die übrigen Beteiligten weiterzugeben. Dabei können solche Gefühlszustände wieder sowohl explizit von einem Beitragsurheber eingegeben werden als auch von einem Mustererkennungssystem bestimmt werden. Die Stimmungserkennung kann dabei wie die Feststellung der Urheberschaft eines Beitrages sowohl in einer teilnehmerseitigen Komponente 7 als auch in einem zentralen Gerät 15 des Kommunikationssystems ausgehend von den einlaufenden Datenströmen des Beitrags vorgenommen werden.

Fig 3 zeigt eine Ausführungsform einer Kennzeichnung des Urhebers des momentanen Kommunikationsbeitrags in einem erfindungsgemäßen Kommunikationssystem. Hier sind die Teilnehmer 50 und 61 bis 66 einer Besprechung skizzenhaft z. B. in Form so genannter Avatare auf einem Display 6 dargestellt. Dabei kann die Darstellung der Avatare im einfachsten Fall statisch sein. Es ist aber auch möglich, die von Kameras 4 aufgenommenen Videoinformationen zu einer Animierung der Avatare zu benutzen, die zumindest andeutungsweise die tatsächlichen Bewegungen der Teilnehmer wiedergibt. In Fig. 3 wird ein Rahmen 55 verwendet, um den Urheber 50 des momentan wiedergegebenen Beitrages zu kennzeichnen.

Ein mögliches Szenario ist also, dass der Teilnehmer 50 gerade spricht und sein von einem Mikrofon 3 an seinem Kommunikationsstandort aufgenommener sprachlicher Beitrag über die Lautsprecher 5 der übrigen Kommunikationsstandorte wiedergegeben wird. Das zentrale Gerät 15 benutzt dann Sprecheridentifikation durch Auswertung des Audiosignals, um festzustellen, wer der Urheber des sprachlichen Beitrages ist, und übermittelt die Information, dass es sich dabei um den Teilnehmer 50 handelt, an alle Endgeräte. Diese kennzeichnen dann den Sprecher 50 mit dem Rahmen 55 und geben die Skizze der Konferenz auf den Displays 6 wieder.

Dabei ist ein erfindungsgemäßes Kommunikationssystem dazu vorgesehen, dass die Art und Weise der Wiedergabe von Beiträgen von den Teilnehmern auf der Wiedergabeseite beeinflusst werden kann. So können Teilnehmer ihre persönlichen Vorlieben einbringen und z. B. Textbeiträge mit dem Namen oder mit einem Bild des Urhebers kennzeichnen.

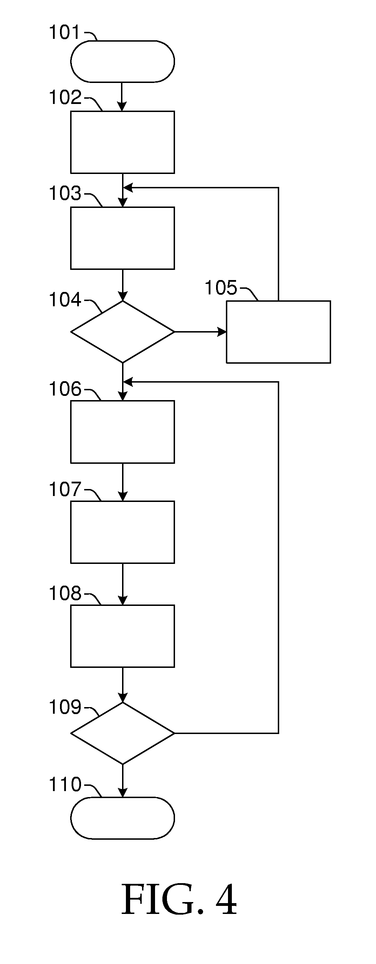

Fig. 4 zeigt den schematischen Ablauf einer Kommunikation in einem erfindungsgemäßen Kommunikationssystem in Form eines Flussdiagramms. Im Startblock 101 wird das erfindungsgemäße Kommunikationssystem eingeschaltet und die Kommunikationsverbindung zwischen den Teilnehmerstandorten aufgenommen. Danach machen sich die Kommunikationsteilnehmer im Prozessblock 102 dem System bekannt, das ihre Identifikationsdaten im Block 103 speichert und die Verfolgung der Teilnehmer beginnt. Je nach eingesetzter Technik und Wissensstand des Systems kann es dabei vorkommen, dass das System noch weitere Angaben benötigt, was dazu im Entscheidungsblock 104 geprüft wird.

Ein Sprecheridentifikationssystem zur Urheberfeststellung braucht z. B. eine gewisse Menge Sprachmaterial von jedem Sprecher, um die Sprecher voneinander unterscheiden zu können. Sind also beispielsweise dem System unbekannte neue Sprecher an der Kommunikation beteiligt, so fordert und erhält das System im Block 105 zusätzliche Informationen von den Teilnehmern, die es dann wieder im Block 103 speichert. Dabei kann es z. B. auch vorkommen, dass Sprecher an der Kommunikation beteiligt sind, deren Stimmen zu ähnlich sind, um sie überhaupt auch bei größerer Menge an Stimmmaterial zuverlässig unterscheiden zu können. In diesem Fall kann das System auf weitere ihm zur Verfügung stehende Identifikationsmöglichkeiten ausweichen wie z. B. Bilderkennung und/oder Standortbestimmung mittels Mikrofonarrays oder Transponder. Besitzt das System diese Alternativen nicht, so muss eine andere, hier nicht näher ausgeführte Fehlerbehandlung durchgeführt werden.

Ergibt die Prüfung im Block 104, ggf. nach mehrmaligem Durchlaufen der Blöcke 103 und 105, dass das System ausreichend Informationen zur Identifikation der Teilnehmer besitzt, so geht die Kontrolle weiter zu Block 106, in dem ein oder mehrere Teilnehmer ihren Kommunikationsbeitrag erbringen. Im Block 107 stellt das System die Urheber der gemachten Beiträge und/oder ihre Stimmungen fest und benutzt diese Informationen im Block 108 zum Transfer und zur Wiedergabe der Beiträge an allen Kommunikationsstandorten. Bewegen sich die Teilnehmer, kann es dabei zur Identifikation nützlich sein, wenn das System die Bewegungen der Teilnehmer mitverfolgt, um eine eindeutige Zuordnung zwischen Standort eines Teilnehmers und seiner Identität zu gewährleisten. Insbesondere bei längeren Beiträgen sollte für eine zügige Wiedergabe der Beiträge, ihrer Urheber und deren Stimmungen die Abarbeitung der Blöcke 106 bis 108 zeitlich überlappend gestaltet werden.

Schließlich wird im Block 109 geprüft, ob noch weitere Kommunikationsbeiträge zu erbringen sind. Wenn ja, kehrt die Kontrolle zu Block 106 zurück. Anderenfalls wird das Kommunikationssystem im Endblock 110 heruntergefahren und abgeschaltet. Dabei werden die Kommunikationsverbindungen zwischen den Standorten definiert getrennt und auf Wunsch kann ein Protokoll der Kommunikationssitzung, d. h. ein Mitschnitt der Kommunikationsbeiträge, ihrer Urheber und deren Stimmungen, z. B. zu Dokumentationszwecken dauerhaft gespeichert werden.

## Patentansprüche

1. Kommunikationssystem mit Systemkomponenten zur Feststellung der Urheberschaft eines an einem Kommunikationsendgerät eingegebenen Kommunikationsbeitrages (40, 41) mittels
- Auswertung eines Videosignals durch Mustererkennung und/oder
- Sprecheridentifikation durch Auswertung eines Audiosignals und/oder
- Bestimmung einer relativen Position des Urhebers (50) inmitten von Kommunikationsteilnehmer (50, 61 bis 66), die als das Kommunikationsendgerät benutzende Teilnehmer angemeldet sind.

2. Kommunikationssystem nach Anspruch 1,
**dadurch gekennzeichnet,**
**dass** das Kommunikationssystem zur Bestimmung der relativen Position des Urhebers (50) über eine Kamera (4) und/oder ein Mikrofon (3) und/oder einen Funkempfänger und/oder einen Infrarotempfänger verfügt.

3. Kommunikationssystem nach Anspruch 1 oder 2,
**dadurch gekennzeichnet,**
**dass** das Kommunikationssystem derart ausgestaltet ist, einen Beitrag (40, 41) in einer Weise (30, 31, 55) wiederzugeben, die den Urheber (30, 31, 50) des Beitrags (40, 41) kennzeichnet.

4. Kommunikationssystem nach Anspruch 3,
**dadurch gekennzeichnet,**
**dass** das Kommunikationssystem derart ausgestaltet ist, einen Beitrag (40) eines häufigen und/oder wichtigen Urhebers (30) gegenüber einem Beitrag (41) eines seltenen und/oder unwichtigen Urhebers (31) hervorzuheben.

5. Kommunikationssystem nach einem der Ansprüche 1 bis 4,
**dadurch gekennzeichnet,**
**dass** das Kommunikationssystem derart ausgestaltet ist, eine Stimmung eines Urhebers (31) eines Beitrags (41) zu erkennen und/oder einen Beitrag (41) in einer Weise (35) wiederzugeben, welche die Stimmung des Urhebers (31) des Beitrags (41) kennzeichnet.

6. Kommunikationssystem nach einem der Ansprüche 3 bis 5,
**dadurch gekennzeichnet,**
**dass** das Kommunikationssystem derart ausgestaltet ist, dass ein Kommunikationsteilnehmer (30, 31, 50, 61 bis 66) die Kennzeichnung eines Beitrages (40, 41) beeinflussen kann.

7. Kommunikationssystem nach einem der Ansprüche 1 bis 6,
**dadurch gekennzeichnet,**
**dass** das Kommunikationssystem derart ausgestaltet ist, dass ein Beitrag (40, 41) und/oder der Urheber (30, 31, 50) des Beitrages (40, 41) und/oder dessen Stimmung gespeichert werden.

8. Kommunikationssystem nach einem der Ansprüche 1 bis 7,
**dadurch gekennzeichnet,**
**dass** ein zentrales Gerät (15) des Kommunikationssystems als Systemkomponente zur Feststellung der Urheberschaft eines Kommunikationsbeitrages (40, 41) ausgestaltet ist.

9. Kommunikationssystem nach einem der Ansprüche 1 bis 7,
**dadurch gekennzeichnet,**
**dass** ein teilnehmerseitiges Gerät (7) des Kommunikationssystems als Systemkomponente zur Feststellung der Urheberschaft eines Kommunikationsbeitrages (40, 41) ausgestaltet ist.

10. Verfahren zur Feststellung der Urheberschaft eines an einem Kommunikationsendgerät eingegebenen Kommunikationsbeitrages (40, 41) mittels
- Auswertung eines Videosignals durch Mustererkennung und/oder
- Sprecheridentifikation durch Auswertung eines Audiosignals und/oder
- Bestimmung einer relativen Position des Urhebers (50) inmitten von Kommunikationsteilnehmer (50, 61 bis 66), die als das Kommunikationsendgerät benutzende Teilnehmer angemeldet sind.
